# EUROPÄISCHE PATENTANMELDUNG

(11) **EP 1 640 052 A1**
(43) Veröffentlichungstag der Anmeldung: **29.03.2006**
(21) Anmeldenummer: 05018025.6
(22) Anmeldetag: 19.08.2005
(51) Int. Cl.: B01D 29/82, B30B 9/12, B01D 29/35, B30B 9/26

(54) **Vorrichtung zum Trennen von Feststoffpartikeln aus einer Flüssigkeit**

(30) Priorität: 22.09.2004 DE 102004046242
(71) Anmelder: WEDA-DAMMANN & WESTERKAMP GmbH, 49424 Goldenstedt (DE)
(72) Erfinder: Sextro, Franz-Josef, 49377 Vechta (DE)
(74) Vertreter: Pott, Ulrich

(57) **Zusammenfassung**

Die vorliegende Erfindung bezieht sich auf eine Vorrichtung zum Trennen von Feststoffpartikeln aus einer Flüssigkeit mit einem Gehäuse, dessen Wandung Sieböffnungen aufweist, einer Zuführöffnung und einer Abgabeöffnung im Gehäuse, einer darin angeordneten antreibbaren Förderschnecke mit einer über ihre Länge unterschiedlichen Steigung der Stegbleche und einem die Abgabeöffnung des Gehäuses wahlweise verschließenden Verschlußstück.

Um die Entwässerungsleistung der Vorrichtung zu erhöhen, wird vorgeschlagen, daß sich in Förderrichtung an einen ersten Abschnitt (16) der Wandung mit Sieböffnungen ein zweiter Abschnitt (18) der Wandung mit Sieböffnungen anschließt.

## Beschreibung

Die vorliegende Erfindung bezieht sich auf eine Vorrichtung zum Trennen von Feststoffpartikeln aus einer Flüssigkeit mit einem Gehäuse, dessen Wandung zumindest über eine Teillänge Sieböffnungen aufweist, einer Zuführöffnung und einer Abgabeöffnung im Gehäuse, einer darin angeordneten antreibbaren Förderschnecke mit einer über ihre Länge unterschiedlichen Steigung der Stegbleche und einem die Abgabeöffnung des Gehäuses wahlweise verschließenden Verschlußstück.

Eine gattungsgemäße Vorrichtung ist bekannt aus der Schrift WO 02/22348 A1. Die aus dieser Schrift bekannte Vorrichtung ist geeignet, Feststoffe, die in die Flüssigkeit gemischt sind, zumindest teilweise von der Flüssigkeit zu trennen. Eine solche Aufgabenstellung ergibt sich insbesondere für die Aufarbeitung von Gülle aus der landwirtschaftlichen Tierhaltung. Die in einem Stall anfallende Gülle ist mit einer erheblichen Anzahl von Feststoffpartikeln durchsetzt. Beispielsweise ist Schweinegülle mit einer Trockensubstanz von 6 % an Feststoffpartikeln versehen. Um die Gülle möglichst umweltfreundlich weiter zu verarbeiten, ist es in einer ersten Bearbeitungsstufe erforderlich, die Trockensubstanz von der Flüssigkeit zu trennen.

Die aus dem Stand der Technik vorbekannte Vorrichtung fördert die zugeführte Flüssigkeit mit einer Förderschnecke auf eine Abgabeöffnung zu. In der Wandung des Gehäuses befinden sich Sieböffnungen, durch die die Flüssigkeit ablaufen kann, während die Feststoffpartikel von der Förderschnecke weiter befördert werden auf die Abgabeöffnung zu. Die Größe der Abgabeöffnung kann durch ein bewegliches Verschlußstück verändert werden. Je nach Schließstellung des Verschlußstückes wird im Gehäuse der Vorrichtung ein auf die Flüssigkeit wirkender Druck aufgebaut, der die Abscheidewirkung auf die Flüssigkeit erhöht. Trotzdem wird mit der bekannten Vorrichtung der Trockensubstanzgehalt der Feststoffpartikel-Fraktion nur in einem noch nicht zufriedenstellenden Maß erhöht. Außerdem ergibt sich das Problem, daß sich bei der Entwässerung von landwirtschaftlicher Gülle die Sieböffnungen mit Feststoffpartikeln und Tierhaaren, insbesondere Schweineborsten, zusetzen können.

Demgemäß ist es die Aufgabe der vorliegenden Erfindung, die Entwässerungsleistung der Presse zu erhöhen.

Die Aufgabe wird für eine gattungsgemäße Vorrichtung gelöst, indem sich in Förderrichtung der Flüssigkeit an einen ersten Abschnitt der Wandung mit Sieböffnungen ein zweiter Abschnitt der Wandung mit Sieböffnungen anschließt.

Durch die zweistufige Entwässerung der Flüssigkeit werden erheblich höhere Werte des Trockensubstanzanteils erzielt. Der Trockensubstanz-Gehalt der Dickfraktion kann mit der erfindungsgemäß ausgestalteten Vorrichtung 25 % bis 40 % erreichen. Mit der erfindungsgemäßen Vorrichtung kann ein Tagesdurchsatz von 30 t bis 50 t landwirtschaftlicher Gülle erzielt werden. Die Durchsatzleistung ist dabei teilweise abhängig von der Art und Zusammensetzung der jeweils zugeführten Flüssigkeit. Der mit der Vorrichtung erzielbare Trockensubstanzanteil in der Dickfraktion ist durch die Vorwahl der Schließstellung des Verschlußstückes einstellbar. Je mehr das Verschlußstück die Abgabeöffnung schließt, um so höher kann der von der Förderschnecke aufgebaute Druck innerhalb des Gehäuses ansteigen und um so größer wird die Entwässerungswirkung der Vorrichtung.

Der zweistufige Aufbau der Vorrichtung ermöglicht es, mit unterschiedlichen Größen der Sieböffnungen zu arbeiten. Im ersten Abschnitt der Wandung sollten die Sieböffnungen klein gehalten werden, um dadurch einen Verlust von Feststoffpartikeln zu vermeiden. Das Risiko, insbesondere im ersten Abschnitt Feststoffpartikel zu verlieren, ist besonders groß, weil hier der Verdünnungsgrad der Feststoffpartikel in der Flüssigkeit noch am größten ist und die Feststoffpartikel dadurch sehr leicht durch die Sieböffnungen herausgespült werden können. In diesem Abschnitt können die Sieböffnungen kleiner sein als die Abmessungen der größten Feststoffpartikel. Durch den hohen Anteil von Flüssigkeit in der zugeführten Mischung werden die Sieböffnungen von den vorbeistreichenden Stegblechen der Förderschnecke immer wieder freigespült, so daß die Sieböffnungen trotzdem nicht allzu schnell verstopfen.

Nachdem in dem ersten Abschnitt durch die kleinen Sieböffnungen eine Erhöhung des prozentualen Anteils der Trockensubstanz und damit eine Andickung der beförderten Flüssigkeit erzielt wurde, können im zweiten Abschnitt die Sieböffnungen größer ausfallen, da der dort austretende Flüssigkeitsanteil nicht mehr so groß ist wie im ersten Abschnitt und sich dadurch die Gefahr verringert, daß Feststoffpartikel in diesem Bereich mit durch die Sieböffnungen ausgeschwemmt werden können. Andererseits erleichtern die vergrößerten Sieböffnungen jedoch das Austreten von weiterer Flüssigkeit, die im ersten Abschnitt noch nicht abgeschieden wurde.

Außerdem kann der erste Abschnitt mit Sieböffnungen vom zweiten Abschnitt mit Sieböffnungen durch einen Abschnitt der Wandung unterteilt sein, der keine Sieböffnungen aufweist. Durch den Abschnitt ohne Sieböffnungen verlängert sich die Verweildauer der Flüssigkeitsmischung im Gehäuse. Da die wässrige Fraktion im ersten Abschnitt aus dem Teil der Flüssigkeit austritt, der benachbart zur Oberfläche der Wandung mit den Sieböffnungen transportiert wird, ergeben sich ungleichmäßige Verteilungen der Flüssigkeitskonzentration in radialer Richtung am Ende des ersten Abschnittes. Durch die Beförderung der Flüssigkeit durch einen Abschnitt der Wandung ohne Sieböffnungen hindurch kann sich in diesem Abschnitt die Flüssigkeitsverteilung wieder homogenisieren. Insbesondere steigt die Flüssigkeitskonzentration der Flüssigkeitsmischung in den wandungsnahen Bereichen wieder an. Dadurch kann im nachfolgenden zweiten Abschnitt mit Sieböffnungen eine zusätzliche Menge von Flüssigkeit über die Sieböffnungen abgeschieden werden, die sich inzwischen wieder in den wandungsnahen Bereichen eingefunden hat.

Weitere Verbesserungen und Abwandlungen der Erfindung ergeben sich aus den kennzeichnenden Merkmalen der Unteransprüche, den Zeichnungen und der nachfolgenden gegenständlichen Beschreibung.

Die Erfindung soll nun anhand von Ausführungsbeispielen näher erläutert werden.
Es zeigen:
- Fig. 1:: eine Außenansicht der erfindungsgemäßen Vorrichtung,
- Fig. 2:: eine Ansicht der Förderschnecke, und
- Fig. 3:: eine Prinzipskizze einer Vorrichtung mit automatischer Regelung.

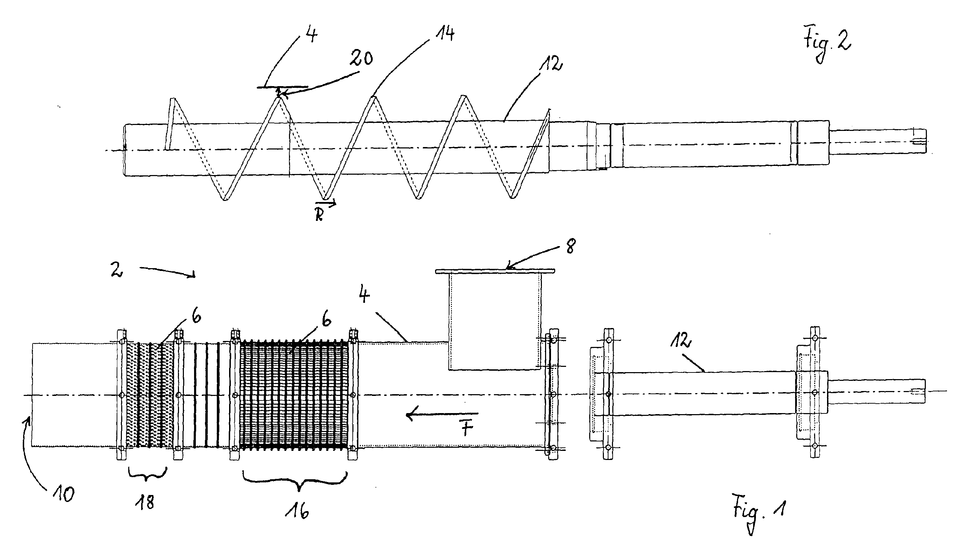

In Fig. 1 ist die Vorrichtung 2 zu sehen, die im wesentlichen aus einem Gehäuse 4 besteht. Das Gehäuse 4 kann in einem separaten Tragrahmen angeordnet sein. Das Gehäuse 4 ist zylindrisch ausgebildet. Die Wandung des Gehäuses 4 ist teilweise geschlossen, teilweise aber auch mit Sieböffnungen 6 versehen. Die Flüssigkeit, in die die Feststoffpartikel eingemischt sind, wird über eine Zuführöffnung 8 in das Innere des Gehäuses 4 eingeleitet. Im Ausführungsbeispiel befindet sich die Zuführöffnung 8 in einem Anschlußstutzen, der auf das Gehäuse 4 aufgesetzt ist. Die Flüssigkeit mit den eingemischten Feststoffpartikeln wird in Förderrichtung F durch das Gehäuse 4 hindurchbefördert. Während der wässerige Bestandteil der Flüssigkeit durch die Sieböffnungen 6 aus dem Innenraum des Gehäuses nach außen austreten kann, werden insbesondere die Feststoffpartikel sowie der noch nicht abgeschiedene Teil der Flüssigkeit zur Abgabeöffnung 10 hin durch das Gehäuse 4 bewegt. Innerhalb des Gehäuses 4 wird die Flüssigkeit von einer Förderschnecke 12 bewegt, von der in Fig. 1 nur der Anschlußstutzen mit Flanschringen zu sehen ist, über die die Förderschnecke 12 am Gehäuse 4 befestigt wird. Die Förderschnecke 12 wird im Flanschstück gelagert, der mit Stegblechen 14 versehene Teil der Förderschnecke 12, der sich innerhalb des Gehäuses 4 befindet, wird an seinem der Abgabeöffnung 10 zugewandten Ende im Ausführungsbeispiel nicht abgestützt.

In Fig. 1 ist erkennbar, daß das Gehäuse 4 einen ersten Abschnitt 16 mit Sieböffnungen 6 und einen zweiten Abschnitt 18 mit Sieböffnungen 6 aufweist. Die Abschnitte 16, 18 sind voneinander unterscheidbar durch ihre unterschiedliche Lochgröße, Lochform und/oder durch den Zwischenabschnitt ohne Sieböffnungen 6. Der erste Abschnitt 16 ist im Ausführungsbeispiel länger als der zweite Abschnitt 18. Im Ausführungsbeispiel sind zudem die Sieböffnungen 6 im ersten Abschnitt 16 kleiner als die Sieböffnungen 6 im zweiten Abschnitt 18. Die Breite der Sieböffnungen 6 im zweiten Abschnitt 18 können mindestens doppelt so groß ausfallen wie die Breite der Sieböffnungen 6 im ersten Abschnitt 16. Beispielsweise können die Sieböffnungen 6 im ersten Abschnitt eine Größe von 0,3 mm aufweisen, während die Sieböffnungen 6 im zweiten Abschnitt eine Lochgröße von beispielsweise 2 mm aufweisen. Für eine effektive Abscheidung der Flüssigkeit genügt es, wenn der Lochanteil der Sieböffnungen 6 in einem Abschnitt 16, 18 mit Sieböffnungen 6 kleiner ist als 50 % der gesamten Innenoberfläche der Wandung in diesem Abschnitt 16, 18. Insbesondere sollte sich der Anteil der Lochfläche in einem Bereich von 20 % bis 40 % der Wandungsoberfläche bewegen.

Für die Konstruktion der Abschnitte 16 und 18, die Sieböffnungen 6 aufweisen, können verschiedene Lösungen gewählt werden. Der erste Abschnitt kann beispielsweise aus einem dichtmaschigen Drahtsieb bestehen, oder es werden Gußringe aneinandergesetzt, die an ihren Auflageflächen Einkerbungen aufweisen, die nach dem Zusammensetzen der Gußringe als Sieböffnungen 6 dienen, es können Lochbleche eingesetzt werden oder sonstige geeignete Siebkonstruktionen verwendet werden. Neben metallischen Siebkonstruktionen sind auch Kunststoffsiebe verwendbar, die leicht als Spritzgußteil herstellbar sind. Besonders kostengünstig sind aus Metall hergestellte Lochbleche. Die Löcher können bis zu bestimmten Mindestlochgrößen in die Bleche eingestanzt werden, unterhalb dieser Mindestlochgröße können die Löcher auch gelasert werden. Wegen der größeren Lochgrößen eignet sich besonders der zweite Abschnitt dazu, die Wandung aus Siebblechen herzustellen.

Wie ebenfalls aus Fig. 1 ersichtlich ist, wird der erste Abschnitt 16 der Wandung vom zweiten Abschnitt 18 der Wandung durch einen Abschnitt getrennt, der keine Sieböffnungen 6 aufweist. Dieser Zwischenabschnitt ist vorgesehen, um nach dem Durchlauf der Flüssigkeit durch den ersten Abschnitt 16 die Flüssigkeitsverteilung innerhalb der von der Förderschnecke 12 beförderten Gutmenge zu homogenisieren. In diesem Abschnitt sollen sich insbesondere Flüssigkeitsüberschüsse der wäßrigen Lösung, die sich im Bereich der Mittelachse der Förderschnecke 12 befinden, in den äußeren Randbereich des Innenraums des Gehäuses 4 bewegen, um die dort im ersten Abschnitt 6 eingetretene Verdickung der beförderten Flüssigkeit auszugleichen. Dabei unterstützen die Stegbleche 14 der Förderschnecke 12 die Vermischung und Homogenisierung der beförderten Flüssigkeit. Insbesondere wird durch diesen Abschnitt vermieden, daß der Anteil der beförderten Flüssigkeit im Bereich der Außenwandung so stark entwässert und angedickt ist, daß die Feststoffpartikel die Poren der Sieböffnungen 6 im Abschnitt 18 verschließen. Die Auslegung der jeweiligen Lochgrößen und -form in den Abschnitten 16 und 18 sowie deren Länge einschließlich der Länge des Zwischenabschnitts wird beeinflußt durch die im jeweiligen Einsatzfall typische Zusammensetzung der Flüssigkeit, insbesondere des Anteils und der Form der jeweiligen anfallenden Feststoffpartikel. Um eine ideale Anpassung der jeweiligen Vorrichtung auf den individuellen Einsatzfall zu ermöglichen, können die Wandungen in den Abschnitten 16, 18 modulartig gegen andere mit abweichenden Lochgrößen und/oder -formen austauschbar ausgebildet sein. So können in einem Stall mit geringem Alter des Viehbestands andere Lochgrößen und -formen für eine effektive Flüssigkeitsabscheidung erforderlich sein als in einem Stall, in dem das Alter des Viehs erheblich höher ist.

Der Druck, der in einzelnen Abschnitten des Gehäuses 4 auf die beförderte Flüssigkeit wirkt, kann durch eine unterschiedliche Ausbildung der Steigung der auf der Förderschnecke 12 angebrachten Stegbleche 14 variiert werden. In Fig. 2 ist eine vorteilhafte Gestaltung der Stegbleche 14 dargestellt. Die Darstellung der Förderschnecke 12 in Fig. 2 und ihre räumliche Anordnung entspricht im wesentlichen der Zuordnung, mit der sie auch in das darunter abgebildete Gehäuse aus Fig. 1 eingebaut ist. Bei einem Vergleich der Steigung der Stegbleche 14 im Bereich des ersten Abschnittes 16 mit der Steigung der Stegbleche 14 im Bereich des zweiten Abschnitts 18 wird deutlich, daß diese unterschiedlich ausfällt. Während das Stegblech 14 im Bereich des ersten Abschnitts 16 eine sehr ausgeprägte Steigung aufweist, ist die Steigung des Stegbleches 14, das in den zweiten Abschnitt 18 hineinragt, erheblich geringer.

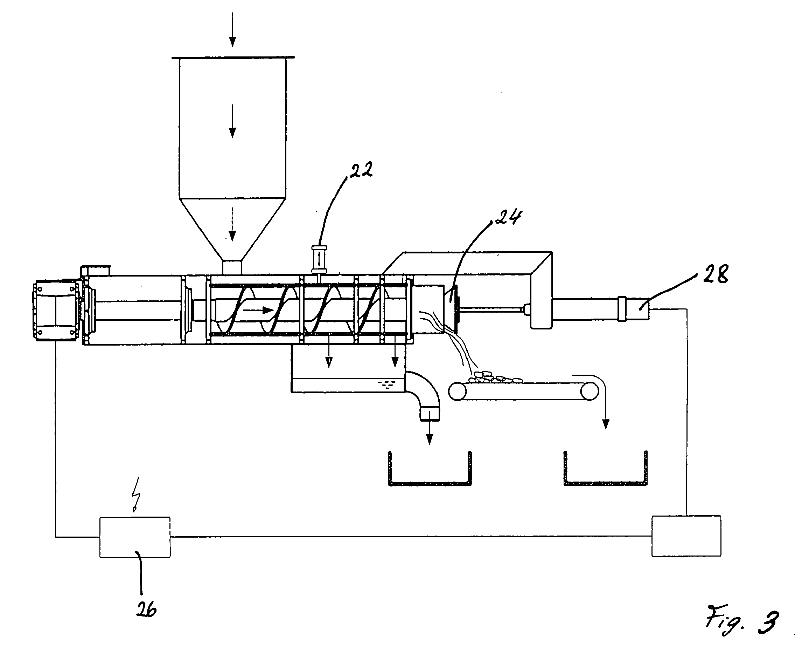

Im Ausführungsbeispiel weist die Förderschnecke 12 die Besonderheit auf, daß sie mit ihrem in den zweiten Abschnitt 18 hineinragenden Teil zumindest teilweise keine Stegbleche 14 aufweist. Durch diese Besonderheit wird der in diesem Abschnitt befindliche Teil der Flüssigkeit nicht mehr aktiv von rotierenden Stegbleche 14 weiterbefördert, sondern nur noch von nachgeförderter Flüssigkeit und den stromaufwärts vorhandenen Stegblechen 14 unter Druck gesetzt. Dadurch beruhigt sich die im zweiten Abschnitt 18 vorhandenen Flüssigkeit, und in diesem Teil des Gehäuses 4 kann gegen die Wirkung des in Fig. 3 dargestellten Verschlußstückes 24 ein Überdruck aufgebaut werden. In diesem Abschnitt wird also ein Materialpfropf aufgebaut, der aus der inzwischen angedickten Flüssigkeit besteht und der sich endseitig gegen das Verschlußstück 24 abstützt.

Indem das Verschlußstück 24 gemäß einem Ausführungsbeispiel auf einen bestimmten Schwellwert eines Gegendruckes einstellbar ist, öffnet das Verschlußstück 24 die Abgabeöffnung 10 immer dann, wenn der Druck innerhalb des Gehäuses 4 im Bereich des zweiten Abschnittes 18 und des stromabwärts gelegenen Schlußzylinderstückes einen Grenzwert überschreitet. Auf diese Weise stellt sich durch die Förderwirkung der Förderschnecke 12 und den für das Verschlußstück 24 eingestellten Schwellwert eine Art Gleichgewichtszustand ein.

Das Verschlußstück 24 kann auch so eingestellt sein, daß es dauerhaft einen Spalt in der Abgabeöffnung 10 offen läßt, durch den die verdickte Feststoff-Fraktion aus der Vorrichtung 2 austreten kann. Durch den Überdruck werden im Bereich des zweiten Abschnittes 18 wässerige Bestandteile aus der im Gehäuse 4 befindlichen Flüssigkeit ausgeschieden, während die am stärksten entwässerten Fraktionen der im Gehäuse 4 befindlichen Flüssigkeit über die Abgabeöffnung 10 das Gehäuse 4 verlassen. Durch das im Bereich des zweiten Abschnittes 18 aufgebaute Druckgleichgewicht können über die dort angeordneten Sieböffnungen 6 noch erhebliche wässerige Bestandteile der Flüssigkeit durch die Sieböffnungen 6 ausgeschieden werden.

Durch die Veränderung des Schwellwertes des Verschlußstückes 24 kann die Abscheidequote der wässerigen Bestandteile im Bereich des zweiten Abschnittes 18 variiert werden, so daß sich je nach Einstellung des Schwellwertes unterschiedliche Anteile der Trockensubstanz für die Flüssigkeitsteile ergeben, die durch die Abgabeöffnung 10 aus dem Gehäuse 4 austreten. Bei der Auswahl des einzustellenden Schwellwertes ist zu berücksichtigen, daß der an der Abgabeöffnung 10 erreichte Trockensubstanzanteil nicht nur vom eingestellten Schwellwert abhängig ist, sondern auch vom prozentualen Anteil des Trockensubstanz-Gehaltes an der durch die Zuführöffnung 8 in das Gehäuse 4 beförderten Flüssigkeit.

Es ist auch möglich, das Öffnungsmaß des Verschlußstückes 24, beispielsweise in Form der Öffnungsweite des Ringspaltes, die sich zwischen dem Gehäuse 4 und der jeweiligen Position des Verschlußstücks 24 ergibt, automatisiert einstellbar zu gestalten. Dazu ist ein in Fig. 3 dargestellter Sensor 26 erforderlich, der die absolute und/oder relative Belastung der Förderschnecke 12 direkt oder indirekt ermittelt. So kann beispielsweise die Stromaufnahme des Antriebsmotors der Förderschnecke 12 oder der herrschende Druck im Gehäuse 4 als Maß für die Belastung der Förderschnecke gemessen werden. Der ermittelte Wert des Sensors 26 wird in einen Sollstellwert für einen Stellmotor des Verschlußstückes 24 oder das Verschlußstück 24 selbst umgewandelt. Weicht dieser Sollstellwert vom aktuellen Iststellwert ab, wird der Stellmotor beziehungsweise das Verschlußstück 24 auf den Sollstellwert nachgeführt. Da sich bei einem neuen Iststellwert auch eine neue Belastung der Förderschnecke 12 einstellt, ist anhand dieser neuen Belastung wieder ein neuer Sollstellwert ermittelbar. Auf diese Weise ergibt sich eine endlose Regelschleife.

Eine Veränderung der Belastung der Förderschnecke 12 ergibt nicht nur aus der Veränderung des Iststellwertes, sondern auch aus der Menge und Konsistenz der zu verarbeitenden Flüssigkeit. Über die Messung der Belastung der Förderschnecke 12 werden auch solche Lastveränderungen erfaßt und fließen in den Regelprozeß ein. Eine einfach herstellbare und funktionsfähige Regelung ergibt sich, wenn die Stromaufnahme des Antriebsmotors der Förderschnecke 12 in ein analoges Stellsignal eines hydraulischen oder pneumatischen Stellzylinders 28 ungewandelt wird, durch das dieser verstellbar ist.

Anstatt in einem Bereich des zweiten Abschnittes 18 keine Stegbleche 14 vorzusehen, kann gemäß einer alternativen Ausgestaltung auch vorgesehen sein, die Steghöhe der Stegbleche 14 zu verringern, so daß dadurch die Förderwirkung erheblich verringert wird.

Um das Risiko zu verringern, daß sich bei länger andauerndem Betrieb der Vorrichtung 2 die Sieböffnungen 6 mit Feststoffpartikeln zusetzen könnten, wird vorgeschlagen, das Maß des Außendurchmessers der Stegbleche 14 der Förderschnecke 12 im Verhältnis zum Innendurchmesser der Wandung des Gehäuses 4 so auszuwählen, daß zwischen den Stegblechen 14 und der Innenoberfläche der Wandung ein offener Spalt 20 verbleibt, durch den die im Gehäuse 4 beförderte Flüssigkeit in eine der Förderrichtung entgegengesetzte Richtung R zurückströmen kann. Im Bereich der Außenkante der Stegbleche 14 ergeben sich auf diese Weise turbulente Strömungen in der Flüssigkeit, die Feststoffpartikel, die auf eine Sieböffnung 6 gedrückt werden, von der Sieböffnung 6 ablösen und wegspülen. Da zudem eher die wässerigen Bestandteile der Flüssigkeit als die Feststoffpartikelanteile dazu neigen, den Spalt 20 zu durchströmen, sammelt sich in einer direkten Nähe zu den Sieböffnungen 6 ein erheblicher Anteil der wässerigen Phase der Flüssigkeit an. Damit wird durch die Spalte 20 nicht nur ein Verstopfen der Sieböffnungen 6 verhindert, sondern die Spalte 20 konzentrieren die Ansammlung der wässerigen Lösung auf den Bereich der Außenwandung des Gehäuses 4 und damit in die Nähe der Sieböffnung 6. Die Spalte 20 sind damit ein wichtiger Bestandteil, um eine hohe Abscheideleistung der Vorrichtung 2 zu erzielen. Für eine ausreichende Rückspülung im Bereich der Spalte 20 kann schon eine Spalthöhe von 1 mm ausreichen, um die gewünschten Effekte herbeizuführen. Insbesondere ermöglicht es der Spalt 20, Schweineborsten aus den Sieböffnungen 6 auszuspülen, die bei den herkömmlichen Siebvorrichtungen sehr schnell die Siebe zusetzen.

Durch die Spalte 20 wird auch vermieden, daß die Kanten der Stegbleche 14 über die Innenoberfläche des Gehäuses 4 schleifen können. Ohne einen schleifenden Kontakt der Stegbleche 14 auf der Innenoberfläche des Gehäuses 4 kann die Förderschnecke 12 mit einem geringen Verschleiß und großer Laufruhe betrieben werden.

Zusätzlich oder alternativ zur vorstehend beschriebenen Rückströmung kann im Bereich des ersten und/oder zweiten Abschnitts 16, 18 auch zumindest eine Klopfvorrichtung 22 vorgesehen sein, mit der schlagartige Impulse auf das Gehäuse 4 aufgebracht werden können. Die schlagartigen Impulse müssen so heftig sein, daß sich durch mit den Impulsen ausgelöste Schwingungen des Gehäuses 4 im Bereich der Sieböffnungen 6 an der Wandung des Gehäuses 4 anhaftende Feststoffpartikel zumindest lockern. Durch die gelockerte Anhaftung am Gehäuse 4 kann die vorbeiströmende Flüssigkeit die gelockerten Feststoffpartikel besser umströmen, die Anhaftung noch weiter verringern und schließlich mit sich spülen. Auch die äußeren Kanten der sich entlang der Innenoberfläche des Gehäuses 4 bewegenden Stegbleche 14 bewirken einen Spüleffekt und können bei einer verringerten Anhaftung der Feststoffpartikel auf der Innenoberfläche ebenfalls deren Abförderung bewirken. Insbesondere wenn sich nach einem Impuls größere, flächige Stücke von Feststoffpartikeln ablösen, können diese von den Stegblechen 14 zusammen mit anderen Feststoffen zur Abgabeöffnung 10 abgefördert werden. Durch den Bröckeleffekt im Randbereich zu anderen, noch an der Innenoberfläche anhaftenden flächigen Stükken können auch diese noch verbleibenden Feststoffpartikel besser umspült und dadurch leichter abgefördert werden. Auf diese Weise kann sich eine Art Dominoeffekt ergeben, durch den nach einem Impuls ganze Innenoberflächenbereiche von anhaftenden Feststoffpartikeln befreit werden. Um eine optimale Ablösung zu erzeilen, können auch mehrere Klopfvorrichtungen 42 vorhanden sein, deren Klangstärke, Schlagstärke, Frequenz und dergleichen aufeinander abgestimmt sein können.

Auch ist der Energiebedarf für den Betrieb der Vorrichtung 2 sehr niedrig. Eine zufriedenstellende Abscheideleistung kann erzielt werden, wenn die Förderschnecke mit einer Drehzahl von unter 100 U/min betrieben wird. Bevorzugt sollte die Drehzahl der Förderschnecke 12 in einem Bereich zwischen 10 und 40 U/min liegen. Bei einer solchen Auslegung reicht bei gegebenem Durchmesser und gegebener Länge eine Motorleistung für den Antrieb der Förderschnecke 12 aus, der unterhalb von 5 kW liegt.

## Patentansprüche

1. Vorrichtung (2) zum Trennen von Feststoffpartikeln aus einer Flüssigkeit mit einem Gehäuse (4), dessen Wandung zumindest über eine Teillänge Sieböffnungen (6) aufweist, einer Zuführöffnung (8) und einer Abgabeöffnung (10) im Gehäuse (4), einer darin angeordneten antreibbaren Förderschnecke (12) mit einer über ihre Länge unterschiedlichen Steigung der Stegbleche (14) und einem die Abgabeöffnung (10) des Gehäuses (4) wahlweise verschließenden Verschlußstück (24), **dadurch gekennzeichnet, daß** sich in Förderrichtung an einen ersten Abschnitt (16) der Wandung mit Sieböffnungen (6) ein zweiter Abschnitt (18) der Wandung mit Sieböffnungen (6) anschließt.

2. Vorrichtung (2) nach Anspruch 1, **dadurch gekennzeichnet, daß** die Sieböffnungen (6) im ersten Abschnitt (16) kleiner sind als im zweiten Abschnitt (18).

3. Vorrichtung (2) nach Anspruch 1 oder 2, **dadurch gekennzeichnet, daß** die Durchmesser der Sieböffnungen (6) im zweiten Abschnitt (18) der Wandung mindestens doppelt so groß sind wie die Breiten der Sieböffnungen (6) im ersten Abschnitt (16) der Wandung.

4. Vorrichtung (2) nach einem der vorhergehenden Ansprüche, **dadurch gekennzeichnet, daß** die Wandung im zweiten Abschnitt (18) als Siebblech ausgebildet ist.

5. Vorrichtung (2) nach einem der vorhergehenden Ansprüche, **dadurch gekennzeichnet, daß** der erste Abschnitt (16) und der zweite Abschnitt (18) der Wandung durch einen Abschnitt der Wandung voneinander getrennt sind, der keine Sieböffnungen (6) aufweist.

6. Vorrichtung (2) nach einem der vorhergehenden Ansprüche, **dadurch gekennzeichnet, daß** die Steigung der Stegbleche (14) der Förderschnecke (12) im Bereich des ersten Abschnitts (16) steiler ist als im Bereich des zweiten Abschnitts (18).

7. Vorrichtung (2) nach einem der vorhergehenden Ansprüche, **dadurch gekennzeichnet, daß** in einem Bereich des zweiten Abschnitts (18) der Wandung verkürzte oder keine Stegbleche (14) der Förderschnecke (12) vorhanden sind.

8. Vorrichtung (2) nach einem der vorhergehenden Ansprüche, **dadurch gekennzeichnet, daß** das Maß des Außendurchmesser der Stegbleche (14) der Förderschnecke (12) im Verhältnis zum Innendurchmesser der Wandung des Gehäuses (4) so gewählt ist, daß zwischen den Stegblechen (14) und der Wandung ein offener Spalt (20) vorhanden ist, der eine Rückströmung der Flüssigkeit in eine der Förderrichtung entgegengesetzten Richtung (R) ermöglicht.

9. Vorrichtung (2) nach einem der vorhergehenden Ansprüche, **dadurch gekennzeichnet, daß** zumindest eine Klopfvorrichtung (22) vorhanden ist, mit der schlagartige Impulse in das Gehäuse (4) insbesondere im Bereich eines der Abschnitte (16, 18) einbringbar sind.

10. Vorrichtung (2) nach einem der vorhergehenden Ansprüche, **dadurch gekennzeichnet, daß** mittels eines Sensors (26) eine aktuelle Belastung der Förderschnecke (12) direkt und/oder indirekt ermittelbar und eine Auswertevorrichtung vorhanden ist, durch die das Öffnungsmaß des Verschlußstückes (24) automatisch einstellbar ist.
